# EUROPEAN PATENT APPLICATION

(11) **EP 3 567 983 A1**
(43) Date of publication of application: **13.11.2019**
(21) Application number: 19150551.0
(22) Date of filing: 07.01.2019
(51) Int. Cl.: H04W 88/06, H04W 72/12

(54) **METHOD FOR PERFORMING BLUETOOTH TRANSMISSION MANAGEMENT, ASSOCIATED BLUETOOTH CIRCUIT, AND ASSOCIATED ELECTRONIC DEVICE**

(30) Priority: 07.05.2018 US 201862667627 P; 18.12.2018 US 201816223118
(71) Applicant: MEDIATEK INC., Hsin-Chu 300 (TW)
(72) Inventor: SUN, Juei-Ting, 30078 Hsin-Chu (TW); WEN, Yu-Ming, 30078 Hsin-Chu (TW); HUANG, Che-Wei, 30078 Hsin-Chu (TW)
(74) Representative: Haseltine Lake Kempner LLP

(57) **Abstract**

A method for performing Bluetooth (BT) transmission management is provided. The method includes: before controlling a BT circuit to transmit a BT packet, obtaining a confirmation signal from a Wi-Fi circuit, wherein the confirmation signal indicates whether the Wi-Fi circuit is receiving a Wi-Fi packet or not; and according to the confirmation signal, determining whether to insert at least one idle BT slots pair before the BT circuit transmits the BT packet. Associated apparatus such as the BT circuit and an electronic device including the BT circuit are also provided.

## Description

This application claims the benefit of U.S. provisional application No. 62/667,627, which was filed on May 07, 2018.

### Background

The present invention is related to Bluetooth transmission, and more particularly, to a method for performing Bluetooth (BT) transmission management, an associated Bluetooth circuit, and an associated electronic device.

As both of BT communications and Wi-Fi communications may utilize 2.4G industrial, scientific and medical (ISM) bands to transmit and receive packets, communication performance may be degraded due to failing to properly control for coexistence issues. For example, when a multifunctional television is receiving video data through a Wi-Fi packet from an access point, and concurrently transmitting audio data through a BT packet to a BT speaker, the BT packet may interfere in transmission of the Wi-Fi packet, and some problems such as poor display quality, image lag, etc. may greatly degrade user experience.

Some suggestions have been proposed to try solving the problems in the related art. One or more side effects may be introduced, however. Thus, there is a need for a novel method and associated device, to solve the aforementioned problems without introducing unwanted side effects, or in a way that is less likely to introduce a side effect.

### Summary

An objective of the present invention is to provide a method for performing BT transmission management, an associated BT circuit, and an associated electronic device, to solve the above mentioned problems.

Another objective of the present invention is to provide a method for performing BT transmission management, an associated BT circuit, and an associated electronic device, to achieve optimal performance while properly handling coexistence of BT and Wi-Fi communications.

According to at least one embodiment of the present invention, the present invention provides a method for performing BT transmission management. The method comprise: before controlling a BT circuit to transmit a BT packet, obtaining a confirmation signal from a Wi-Fi circuit, wherein the confirmation signal indicates whether the Wi-Fi circuit is receiving a Wi-Fi packet or not; and according to the confirmation signal, determining whether to insert at least one idle BT slots pair before the BT circuit transmits the BT packet.

According to at least one embodiment of the present invention, the present invention provides a BT circuit, wherein the BT circuit may comprise a controller that is coupled to a Wi-Fi circuit. Before controlling the BT circuit to transmit a BT packet, the controller within the BT circuit may obtain a confirmation signal from the WI-FI circuit. More particularly, the confirmation signal may indicate whether the WI-FI circuit is receiving a WI-FI packet or not. According to the confirmation signal, the controller may determine whether to insert at least one idle BT slots pair before the BT circuit transmits the BT packet.

According to at least one embodiment of the present invention, the present invention provides an electronic device. The electronic device may comprise a Wi-Fi circuit and a BT circuit, wherein the BT circuit is coupled to the Wi-Fi circuit. The Wi-Fi circuit is arranged to perform Wi-Fi communications, and the BT circuit is arranged to perform BT communications. In addition, the BT circuit may comprise a controller that is coupled to the Wi-Fi circuit. Before controlling the BT circuit to transmit a BT packet, the controller may obtain a confirmation signal from the Wi-Fi circuit. More particularly, the confirmation signal may indicate whether the Wi-Fi circuit is receiving a Wi-Fi packet or not. According to the confirmation signal, the controller may determine whether to insert at least one idle BT slots pair before the BT circuit transmits the BT packet.

An advantage of the present invention is that implementing according to embodiments of the present invention will not greatly increase additional costs. In addition, the overall performance of a combo chip equipped with BT and Wi-Fi functions can be improved. Additionally, the present invention can solve the problems of the related art without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating an electronic device according to an embodiment of the present invention.
FIG. 2 illustrates some details regarding BT transmission management performed on BT packets by the controller shown in FIG. 1 according to an embodiment of the present invention.
FIG. 3 is a flowchart illustrating a method for performing BT transmission management according to an embodiment of the present invention.
FIG. 4 illustrates some curves indicating improvement of performance as a result of using the method.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

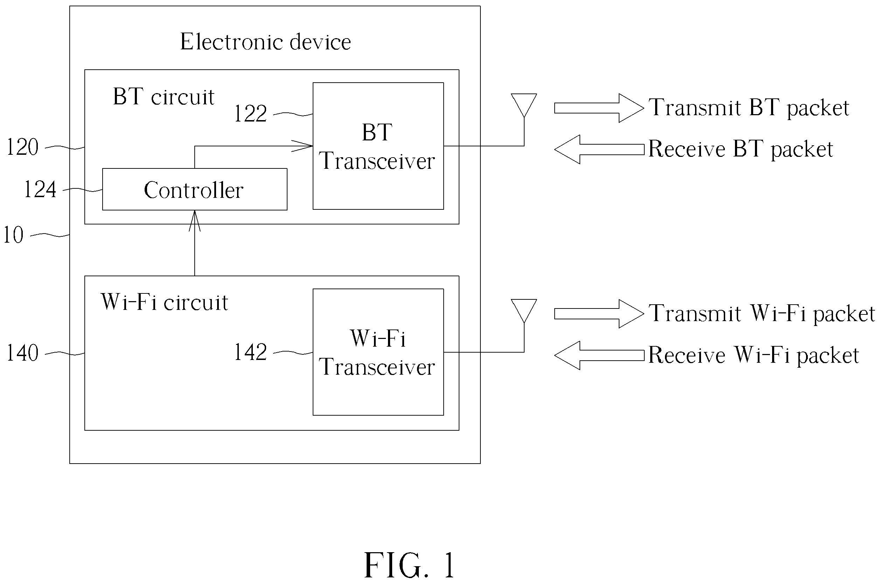

FIG. 1 is a diagram illustrating an electronic device 10 according to an embodiment of the present invention. The electronic device 10 may comprise a BT circuit 120 and a Wi-Fi circuit 140. Examples of the BT circuit 120 may include, but are not limited to: a BT circuit conforming to BT Basic Rate/Enhanced Data Rate (BR/EDR) protocol and a BT circuit conforming to BT Low Energy (BLE) protocol. The BT circuit 120 may comprise a BT transceiver 122 and a controller 124, where the controller 124 is coupled to the BT transceiver 122, and the BT transceiver 122 may be coupled to at least one BT antenna, but the present invention is not limited thereto. The Wi-Fi circuit 140 may comprise a Wi-Fi transceiver 142, and the Wi-Fi transceiver 142 may be coupled to at least one Wi-Fi antenna, but the present invention is not limited thereto. In this embodiment, the Wi-Fi circuit 140 is coupled to the controller 124 within the BT circuit 120. For example, the BT circuit 120 and the Wi-Fi circuit 140 may be implemented on separate circuit board, where the Wi-Fi circuit 140 is coupled to the controller 124 within the BT circuit 120 through an external wire; for another example, the BT circuit and the Wi-Fi circuit may be implemented on a single die (or a single chip), where the Wi-Fi circuit 140 is coupled to the controller 124 within the BT circuit 120 through internal connection (e.g. integrated circuit layout); but the present invention is not limited thereto.

In this embodiment, the BT transceiver 122 may comprise a BT transmitter and a BT receiver (not shown), arranged to transmit BT packets and receive BT packets, respectively, where the controller 124 may control the BT transceiver 122 whether to transmit BT packets and whether to receive BT packets. In addition, the Wi-Fi transceiver 142 may comprise a Wi-Fi transmitter and a Wi-Fi receiver (not shown), arranged to transmit Wi-Fi packets and receive Wi-Fi packets, respectively. According to this embodiment, before controlling the BT circuit 120 (e.g. the BT transceiver 122 within the BT circuit 120) to transmit a BT packet, the controller 124 may obtain a confirmation signal from the Wi-Fi circuit 140, where the confirmation signal may indicate whether the Wi-Fi circuit 140 is receiving a Wi-Fi packet or not. According to the confirmation signal, the controller 124 may determine whether to insert at least one idle BT slots pair before the BT circuit transmits the BT packet.

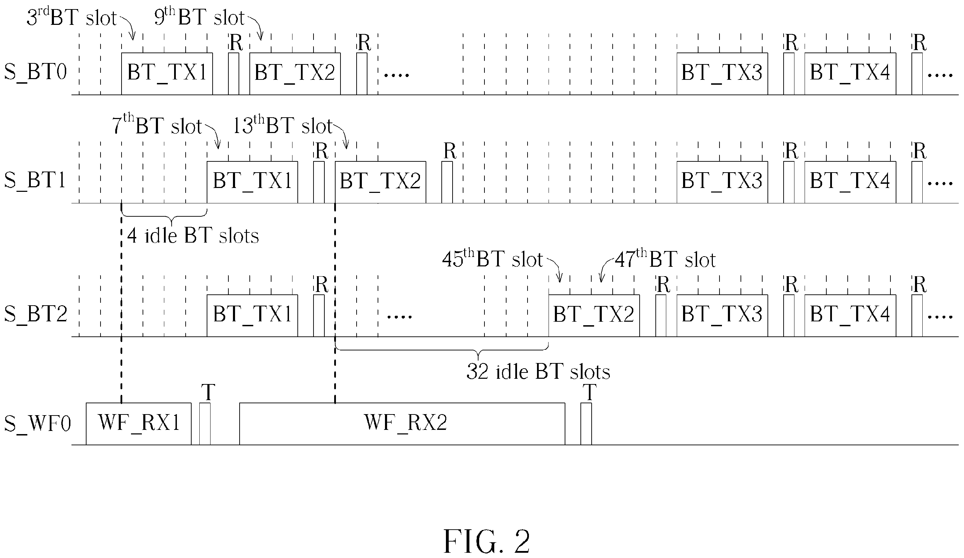

FIG. 2 illustrates some details regarding BT transmission management performed on BT packets BT_TX1, BT_TX2, BT_TX3 and BT_TX4 (e.g. BT packets conforming to Advance Audio Distribution Profile (A2DP)) by the controller 124 shown in FIG. 1 according to an embodiment of the present invention. After the BT circuit 120 is powered on, a BT communication schedule (e.g. BT communications schedules S_BT0, S_BT1, S_BT2, etc.) may be built based on BT slots, where each BT packet (e.g. each transmitted BT packet and each received BT packet) may be aligned with the associated BT slot(s) as shown in FIG. 2. In this embodiment, the BT communications schedule S_BT0 may represent an initial schedule of transmitting the BT packets BT_TX1, BT_TX2, BT_TX3 and BT_TX4 and receiving acknowledgement packets (labeled "R") corresponding to these BT packets, and a Wi-Fi communications schedule S_WF0 may represent an ordinary schedule of receiving Wi-Fi packets WF_RX1 and WF_RX2 and transmitting acknowledgement packets (labeled "T") corresponding to these Wi-Fi packets.

As illustrated with the BT communications schedule S_BT0 shown in FIG. 2, the BT circuit 120 shown in FIG. 1 is originally expected to start transmitting the BT packet BT_TX1 at a 3^{rd} BT slot without performing BT transmission management on the BT packet BT_TX1, where the BT packet BT_TX1 based on the BT communications schedule S_BT0 may interfere with the Wi-Fi packet WF_RX1 that is being received. In order to prevent this problem, the controller 120 may insert at least one idle BT slots pair (such as one or more idle BT slots pairs), for example, two idle BT slots pairs (e.g. four idle BT slots), to generate a period of BT transmission delay before the BT circuit 120 transmits the BT packet BT_TX1, and the BT packet BT_TX2 may be accordingly shifted (from a 9^{th} BT slot to a 13^{th} BT slot) . As a result, the BT communications schedule S_BT0 may be adjusted as the BT communications schedule S_BT1, the controller 124 may allow the BT circuit 120 to start transmitting the BT packet BT_TX1 at the 7^{th} BT slots without further delay, and the Wi-Fi packet WF_RX1 may no longer suffer from BT interference.

As illustrated with the Wi-Fi communications schedule S_WF0 and the BT communications schedule S_BT1 shown in FIG. 2, the BT circuit 120 is originally expected to start transmitting the BT packet BT_TX2 at the 13^{rd} BT slot without performing BT transmission management on the BT packet BT_TX2, where the BT packet BT_TX2 based on the BT communications schedule S_BT1 may interfere with the Wi-Fi packet WF_RX1 that is being received. In this embodiment, the controller 120 needs to further insert 17 idle BT slots pairs (e.g. 34 idle BT slots) in order to completely prevent this problem, an inserted idle BT slots count may need to be limited within a specific range (e.g. limited by a predetermined upper bound of BT transmission delay), however. Examples of a maximum number of the inserted idle BT slots count may include, but are not limited to: 8, 16 or 32 BT slots. Without limitation of the inserted idle BT slots count, it might be hard for a certain BT packet to be transmitted in time if the Wi-Fi circuit 140 keeps receiving a certain Wi-Fi packet for a long time, causing user experience to be degraded, for example, the user may be aware of poor audio (sound) effect. In addition, this predetermined upper bound may be defined based on a current schedule corresponding to the BT packet that is going to be transmitted (e.g. the BT communications schedule S_BT1 for the BT packet BT_TX2), but the present invention is not limited thereto. For example, based on the BT communications schedule S_BT1, the BT packet BT_TX2 may be shifted from the 13^{th} BT slot to the 45^{th} BT slot at most (rather than to the 47^{th} BT slot) as shown in the BT communications schedule S_BT2 when this predetermined upper bound is 32 BT slots, and the controller 124 may allow the BT circuit 120 to start transmitting the BT packet BT_TX2 at the 45^{th} BT slots without further delay, but the present invention is not limited thereto.

As illustrated with the Wi-Fi communications schedule S_WF0 and the BT communications schedule S_BT2 shown in FIG. 2, the Wi-Fi circuit 140 is not receiving any Wi-Fi packet when the BT circuit 120 is expected to start transmitting the BT packet BT_TX3 and BT_TX4, so the controller 124 may allow the BT circuit 120 to normally transmit the BT packet BT_TX3 and BT_TX4, for example, to start transmitting the BT packet BT_TX3 and BT_TX4 at current BT slots thereof, respectively.

Please note that a coexistence problem may occur in a condition of the BT circuit 120 starting to transmit a BT packet while the Wi-Fi circuit is receiving a Wi-Fi packet, for example, the BT packet BT_TX2 shown in the BT communication schedule S_BT1 may interfere with the Wi-Fi packet WF_RX2 shown in the Wi-Fi communication schedule S_WF0. However, the BT packet BT_TX1 shown in the BT communication schedule S_BT1 may not interfere with the Wi-Fi packet WF_RX2 shown in the Wi-Fi communication schedule S_WF0. Before the Wi-Fi circuit 140 starts receiving the Wi-Fi packet WF_RX2, BT communications (e.g. the BT packet that is being transmitted in air) may be detected, where some configurations of the Wi-Fi transceiver 122, such as a filter type and a receiver gain, may be set in response to this condition to prevent associated interference, but the present invention is not limited thereto.

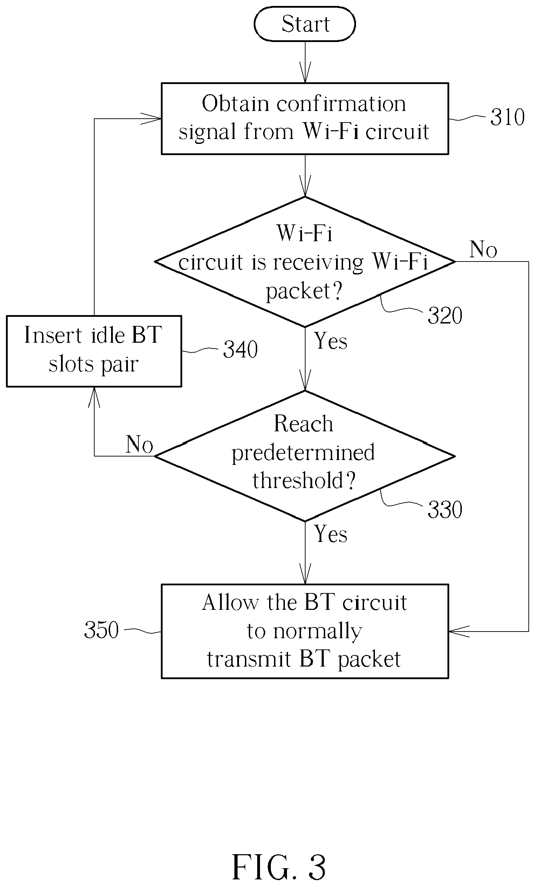

Please refer to FIG. 3 in conjunction with FIG. 1, where FIG. 3 is a flowchart illustrating a method for performing BT transmission management according to an embodiment of the present invention. According to this embodiment, the controller 124 may perform transmission management on the BT transceiver 122 (e.g. perform transmission management on a BT packet that is going to be transmitted by the BT transceiver 122) before controlling the BT circuit 120 to transmit this BT packet (e.g. a BT packet BT_TX(x), such as one of the BT packets shown in FIG. 2), in order to reduce throughput decay of the Wi-Fi receiver within the Wi-Fi transceiver 142 due to BT interference.

In Step 310, the controller 124 may obtain a confirmation signal from the Wi-Fi circuit 140. For example, when the Wi-Fi circuit 140 is receiving at least one Wi-Fi packet (such as a Wi-Fi packet, e.g. any of the Wi-Fi packets WF_RX1 and WF_RX2 shown in FIG. 2), the Wi-Fi circuit 140 may transmit a first confirmation signal (e.g. a logic high signal) to the controller 124, and the first confirmation signal may indicate that the Wi-Fi circuit 140 is receiving the Wi-Fi packet. For another example, when the Wi-Fi circuit 140 is not receiving any Wi-Fi packet, the Wi-Fi circuit 140 may transmit a second confirmation signal (e.g. a logic low signal) to the controller 124, and the second confirmation signal may indicate that the Wi-Fi circuit 140 is not receiving any Wi-Fi packet.

In Step 320, the controller 124 may determine whether the Wi-Fi circuit 140 is receiving the Wi-Fi packet or not according to the confirmation signal (e.g. the first confirmation signal or the second confirmation signal). When the controller 124 obtains the first confirmation signal, Step 330 is entered; otherwise (e.g. the controller 124 obtains the second confirmation signal), Step 350 is entered, for normally transmitting the BT packet BT_TX(x).

In Step 330, the controller 124 may determine whether a period of BT transmission delay of the BT packet BT_TX(x) reaches a predetermined threshold (e.g. the aforementioned predetermined upper bound). When the period of BT transmission delay of the BT packet BT_TX(x) reaches the predetermined threshold (e.g. in the case of the BT packet BT_TX2 within the BT communication schedule S_BT2 shown in FIG. 2), Step 350 is entered, for normally transmitting the BT packet BT_TX(x); otherwise, Step 340 is entered, for inserting at least one idle BT slots pair before transmitting the BT packet BT_TX(x).

In Step 340, the controller 124 may insert at least one idle BT slots pair to generate an additional period of BT transmission delay before the BT circuit 120 transmits the BT packet BT_TX(x) (e.g. the BT packet BT_TX1 as illustrated with the BT communication schedule S_BT1 shown in FIG. 2, which is shifted from the 3^{rd} BT slot to the 7^{th} BT slot).

In Step 350, the controller 124 may allow the BT circuit 120 (e.g. the transmitter within the BT transceiver 122) to normally transmit the BT packet BT_TX(x), for example, to start transmitting the BT packet BT_TX(x) (e.g. any of the BT packets BT_TX3 and BT_TX4 as illustrated within the BT communication schedules S_BT2 shown in FIG. 2) at a current BT slot thereof.

For example, an operation of inserting the aforementioned at least one idle BT slots pair in response to first confirmation signal to generate a period of BT transmission delay (e.g. the aforementioned additional period of BT transmission delay) before the BT circuit 120 transmits the BT packet may correspond to partial paths of entering Step 330 from Step 320 and then entering Step 340 as shown in FIG. 3, but the present invention is not limited thereto. For another example, an operation of allowing the BT circuit 120 to normally transmit the BT packet without further delay in response to the period of BT transmission delay reaching a predetermined threshold (e.g. the aforementioned predetermined upper bound) may correspond to a partial path of entering Step 350 from Step 330 as shown in FIG. 3, but the present invention is not limited thereto. For yet another example, an operation of allowing the BT circuit 120 to normally transmit the BT packet in response to the second confirmation signal may correspond to a partial path of entering Step 350 from Step 320 as shown in FIG. 3, but the present invention is not limited thereto.

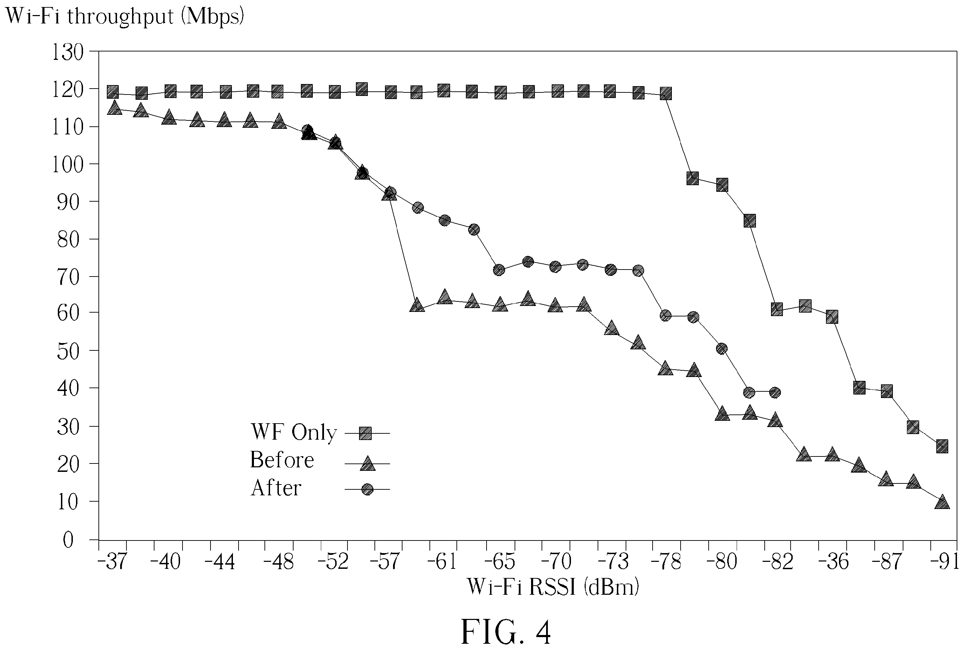

FIG. 4 illustrates some curves indicating improvement of performance as a result of using the method. A horizontal axis and a vertical axis of FIG. 4 may represent Wi-Fi Received Signal Strength Indicator (RSSI) in dBm and Wi-Fi throughput in mega bit per second (Mbps) . A curve corresponding to the legend of "WF only" may indicate communications performance of a Wi-Fi circuit (such as the Wi-Fi circuit 140 shown in FIG. 1) in a situation where there is not any BT interference (e.g. there is no BT packet being transmitted). A curve corresponding to the legend of "Before" may indicate communications performance of this Wi-Fi circuit (such as the Wi-Fi circuit 140 shown in FIG. 1) in a situation where a BT circuit (such as the BT circuit 120) has not turned on the BT transmission management of the method yet (e.g. the BT transmission management may be temporarily disabled) when this BT circuit is transmitting BT packet (s) . A curve corresponding to the legend of "After" may indicate communications performance of this Wi-Fi circuit (such as the Wi-Fi circuit 140 shown in FIG. 1) in a situation where this BT circuit (such as the BT circuit 120) performs BT transmission management of the method when this BT circuit is transmitting BT packet (s) . As shown in FIG. 4, the method for performing BT transmission management can greatly reduce throughput decay of the Wi-Fi circuit 140 due to BT interference from the BT circuit 120, and overall performance for coexistence of BT and Wi-Fi communications can be improved.

To summarize, the method of the present invention can insert additional idle BT slots to prevent BT transmission interfere in operations of receiving a Wi-Fi packet. In addition, the operation of inserting additional idle BT slots is limited by an upper bound, to prevent side effect (s) caused by idle BT transmission. As a result, the present invention method with limited idle BT slot insertion can solve the related art problems without introducing any side effect or in a way that is less likely to introduce a side effect.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing Bluetooth, BT, transmission management, comprising:
before controlling a BT circuit (120) to transmit a BT packet, obtaining a confirmation signal from a Wi-Fi circuit (140), wherein the confirmation signal indicates whether the Wi-Fi circuit (140) is receiving a Wi-Fi packet or not; and
according to the confirmation signal, determining whether to insert at least one idle BT slots pair before the BT circuit (120) transmits the BT packet.

2. The method of claim 1, further comprising:
in response to the confirmation signal indicating that the Wi-Fi circuit (140) is receiving the Wi-Fi packet, inserting said at least one idle BT slots pair to generate a period of BT transmission delay before the BT circuit (120) transmits the BT packet.

3. The method of claim 2, further comprising:
in response to the period of BT transmission delay reaching a predetermined threshold, allowing the BT circuit (120) to normally transmit the BT packet without further delay.

4. The method of claim 1, further comprising:
in response to the confirmation signal indicating that the Wi-Fi circuit (140) is not receiving any Wi-Fi packet, allowing the BT circuit (120) to normally transmit the BT packet.

5. The method of claim 1, wherein the BT circuit (120) conforms to BT Basic Rate/Enhanced Data Rate, BR/EDR, protocol.

6. The method of claim 1, wherein the BT circuit (120) conforms to BT low energy, BLE, protocol.

7. A Bluetooth, BT, circuit (120), comprising:
a controller (124), coupled to a Wi-Fi circuit (140), wherein:
before controlling the BT circuit (120) to transmit a BT packet, the controller (124) within the BT circuit (120) obtains a confirmation signal from the WI-FI circuit (140), wherein the confirmation signal indicates whether the WI-FI circuit (140) is receiving a WI-FI packet or not; and
according to the confirmation signal, the controller (124) determines whether to insert at least one idle BT slots pair before the BT circuit (120) transmits the BT packet.

8. The BT circuit (120) of claim 7, wherein:
when the confirmation signal indicates that the Wi-Fi circuit (140) is receiving the Wi-Fi packet, the controller (124) inserts said at least one idle BT slots pair to generate a period of BT transmission delay before the BT circuit (120) transmits the BT packet; and
when the confirmation signal indicates that the Wi-Fi circuit (140) is not receiving any Wi-Fi packet, the controller (124) allows the BT circuit (120) to normally transmit the BT packet.

9. The BT circuit (120) of claim 8, wherein when the period of BT transmission delay reaches a predetermined threshold, the controller (124) allows the BT circuit (120) to normally transmit the BT packet without further delay.

10. The BT circuit (120) of claim 7, wherein the BT circuit (120) conforms to BT Basic Rate/Enhanced Data Rate, BR/EDR, protocol.

11. The BT circuit (120) of claim 7, wherein the BT circuit (120) conforms to BT low energy, BLE, protocol.

12. An electronic device, comprising:
a Wi-Fi circuit (140), arranged to perform Wi-Fi communications; and
a Bluetooth, BT, circuit (120), coupled to the Wi-Fi circuit (140), arranged to perform BT communications, wherein the BT circuit (120) comprises:
a controller (124), coupled to the Wi-Fi circuit (140), wherein:
before controlling the BT circuit (120) to transmit a BT packet, the controller (124) obtains a confirmation signal from the Wi-Fi circuit (140), wherein the confirmation signal indicates whether the Wi-Fi circuit (140) is receiving a Wi-Fi packet or not; and
according to the confirmation signal, the controller (124) determines whether to insert at least one idle BT slots pair before the BT circuit (120) transmits the BT packet.

13. The electronic device of claim 12, wherein:
when the confirmation signal indicates that the Wi-Fi circuit (140) is receiving the Wi-Fi packet, the controller (124) inserts said at least one idle BT slots pair to generate a period of BT transmission delay before the BT circuit (120) transmits the BT packet; and
when the confirmation signal indicates that the Wi-Fi circuit (140) is not receiving any Wi-Fi packet, the controller (124) allows the BT circuit (120) to normally transmit the BT packet.

14. The electronic device of claim 13, further comprising:
when the period of BT transmission delay reaches a predetermined threshold, the controller (124) allows the BT circuit (120) to normally transmit the BT packet without further delay.

15. The electronic device of claim 12, wherein the BT circuit (120) conforms to BT Basic Rate/Enhanced Data Rate, BR/EDR, protocol or
wherein the BT circuit (120) conforms to BT low energy, BLE, protocol.
